# FASCICULE DE BREVET EUROPEEN

(11) **EP 2 829 754 B1**
(45) Date de publication et mention de la délivrance du brevet: **09.11.2016**
(21) Numéro de dépôt: 14178308.4
(22) Date de dépôt: 24.07.2014
(51) Int. Cl.: F16C 33/58, F16C 41/00, F16C 33/62, F16C 19/52, G01P 3/44

(54) **Bague de roulement allégée, roulement instrumenté incluant une telle bague et module motoréducteur intégrant un tel roulement**
Leichterer Laufring, mit Instrumenten ausgestattetes Lager, das einen solchen Laufring umfasst, und Motorgetriebemodul, das ein solches Lager umfasst
Lightweight bearing ring, instrumented bearing including such a ring and gear motor module incorporating such a bearing

(30) Priorité: 26.07.2013 FR 1357440
(43) Date de publication de la demande: 28.01.2015
(73) Titulaire: NTN-SNR Roulements, 74000 Annecy (FR)
(72) Inventeur: Peterschmitt, Cyril, 74330 LA BALME DE SILLINGY (FR); Silfest, Sébastien, 74940 ANNECY-LE-VIEUX (FR); Vandamme, Etienne, 74650 CHAVANOD (FR)
(74) Mandataire: Alatis

(56) Documents cités:
- EP-A1- 0 424 185
- FR-A1- 2 900 209
- FR-A5- 2 232 960
- JP-A- 2005 076 696
- JP-A- 2007 232 222
- US-A1- 2012 230 621
- US-A1- 2013 121 629

## Description

### DOMAINE TECHNIQUE DE L'INVENTION

L'invention se rapporte à une bague de roulement instrumentée, à un roulement équipé d'une telle bague et plus généralement à un motoréducteur incorporant un tel roulement, destinés en particulier, bien que de manière non exclusive, à des applications robotiques pour intégration dans des bras de robot allégés.

### ÉTAT DE LA TECHNIQUE ANTÉRIEURE

Dans les bras de robots sont intégrés des motoréducteurs équipés de capteurs de mesure de grandeurs caractéristiques du mouvement, par exemple de vitesse ou de déplacement angulaire. Pour des robots de petite taille, en particulier, destinés par exemple à un usage domestique d'aide à la personne, la réduction de l'encombrement et du poids devient un enjeu majeur, ainsi que la modération des coûts de fabrication. Pour répondre aux besoins dans ce secteur, un impératif supplémentaire est la capacité de proposer des éléments modulaires adaptables les uns aux autres et disposant pour ce faire d'interfaces variées.

Dans un contexte différent, non lié à la robotique, on connaît des roulements instrumentés comportant un bloc de mesure rapporté sur une bague de roulement. Un roulement instrumenté de ce type est décrit par exemple dans le document FR 2 900 209, dans lequel il est proposé de fixer un ensemble de détection à une bague fixe du roulement en prévoyant un bourrelet annulaire sur l'ensemble de détection, venant s'insérer dans une gorge annulaire correspondante prévue dans la bague. Le mode d'assemblage entre la bague et l'ensemble de détection induit un surcoût de fabrication des pièces et de montage, qui rend cette solution peu attractive. Un autre roulement instrumenté du même type est illustré dans le document US 2013 0121629 et présente les mêmes inconvénients.

### EXPOSÉ DE L'INVENTION

L'invention vise à proposer des briques structurelles et fonctionnelles intégrant au moins une fonction de guidage en rotation et de mesure, dans un encombrement réduit, et avec des capacités d'interfaçage multiples avec d'autres briques fonctionnelles d'un bras de robot.

Pour ce faire est proposée, suivant un premier aspect de l'invention, une suivant bague de roulement instrumentée comportant :
- une première bague de roulement monobloc (28) comportant au moins un chemin de roulement définissant un axe de rotation, le chemin de roulement étant tourné radialement dans une première direction vers l'intérieur ou vers l'extérieur,
- au moins un premier épaulement annulaire s'étendant radialement, par rapport au chemin de roulement, dans la première direction, et présentant une face interne tournée axialement vers le chemin de roulement, et une face externe tournée axialement à l'opposé du chemin de roulement, le premier épaulement étant traversé par des trous de fixation débouchant sur les faces interne et externe et
- une unité de capteur en appui contre la face interne et destinée à être positionnée en regard d'un codeur solidaire d'une deuxième bague de roulement pour former un roulement instrumenté,

Le même épaulement sert de support pour l'unité de capteur et d'interface de fixation pour un organe tournant ou non tournant, par exemple un carter ou un arbre de sortie d'un étage réducteur d'un groupe moto réducteur. Les trous de fixation sont de préférence filetés, de préférence de bout en bout.

De préférence, l'unité de capteur comporte une plaque de support traversée par un ou plusieurs trous alignés avec un ou plusieurs des trous de fixation. Il est ainsi possible de prévoir des tiges de fixation, par exemple des tiges filetées ou des vis, qui dépassent légèrement de l'épaulement et affleurent au niveau de la plaque. On peut ainsi profiter de l'entièreté de l'épaisseur de l'épaulement pour la fonction de fixation. La plaque de support est de préférence une plaque de circuit imprimé. Cette plaque de circuit imprimé peut notamment supporter un circuit intégré de type ASIC, relié d'une part à un ou plusieurs capteurs, par exemple de type magnéto-résistif ou capacitif ou inductif, de préférence également fixés à la plaque de circuit imprimé, et d'autre part à une interface connectique.

Suivant un mode de réalisation l'unité de capteur présente une forme en arc ouvert d'anneau. On peut alors prévoir que la face interne comporte, sur un secteur angulaire ouvert autour de l'axe de rotation, un renfoncement dans lequel est logé l'unité de capteur, le secteur angulaire ouvert étant de préférence inférieur à 180°, et de préférence inférieur à 120°. On peut même envisager un secteur angulaire inférieur à 90°, notamment si une partie du traitement du signal peut être déportée, de sorte à simplifier et diminuer la taille de l'unité de capteur. Le renfoncement local permet de loger localement l'unité de capteur dans l'épaisseur de l'épaulement, tout en prévoyant par ailleurs une épaisseur suffisante angulairement de part et d'autre du renfoncement, pour assurer la rigidité souhaitée.

Suivant un mode de réalisation alternatif, l'unité de capteur présente une forme annulaire.

Pour accroître les possibilités d'interfaçage avec divers éléments, on peut prévoir un deuxième épaulement s'étendant radialement, par rapport au chemin de roulement, dans une direction radiale opposée à la première direction, et comportant une première face tournée axialement d'un même côté que la face interne et une deuxième face tournée axialement d'un même côté que la face externe, le deuxième épaulement étant traversé par des trous de fixation débouchant sur la première face et la deuxième face. Ces trous peuvent être filetés, de préférence de bout en bout.

Suivant un mode de réalisation préféré, la bague de roulement est une bague extérieure de roulement. En d'autres termes, la première direction est la direction radiale vers l'intérieur, le chemin de roulement étant tourné radialement vers l'intérieur et le premier épaulement s'étendant radialement vers l'intérieur par rapport au chemin de roulement. Dans une application envisagée, cette bague pourra notamment être fixée à un carter de groupe motoréducteur et servir de guidage pour une bague intérieure de roulement qui elle sera frettée ou de manière plus générale solidarisée à un arbre de sortie de ce groupe motoréducteur.

Alternativement, on peut envisager que la première direction soit la direction radiale vers l'extérieur, le chemin de roulement étant tournée radialement vers l'extérieur et le premier épaulement s'étendant radialement vers l'extérieur par rapport au chemin de roulement, la bague étant dans ce cas une bague intérieure de roulement.

Par bague monobloc, on entend ici une bague constituant une pièce unique, indissociable. Suivant un mode de réalisation, la bague de roulement monobloc est une pièce métallique. Alternativement, et dans un souci d'allègement, on prévoit suivant un mode de réalisation particulièrement avantageux au moins une pièce métallique annulaire formant le chemin de roulement et un corps-en matériau plastique surmoulé sur la pièce métallique et incluant le premier épaulement. Le cas échéant, on peut prévoir que le corps comporte des inserts métalliques constituant les trous de fixation. Ces inserts contribuent à la rigidité axiale de la bague.

Suivant un autre aspect de l'invention, celle-ci a trait à un roulement instrumenté comportant une première bague de roulement telle que décrite précédemment, une deuxième bague de roulement, présentant au moins un chemin de roulement en regard du chemin de roulement de la première bague de roulement, et des corps roulant étant en contact avec les chemins de roulement de la première bague de roulement et de la deuxième bague de roulement, la deuxième bague de roulement étant équipée d'un codeur disposé en regard et à distance de lecture de l'unité de capteur de la première bague de roulement. Pour permettre de multiples interfaçages à partir d'un roulement standardisé, on peut prévoir que la deuxième bague de roulement comporte une portée plane percée de trous de fixation.

Pour diminuer la masse, on peut avantageusement prévoir la deuxième bague de roulement comporte une pièce métallique annulaire formant le chemin de roulement de la deuxième bague de roulement et un corps en matière plastique surmoulé sur la pièce métallique.

De préférence, le codeur est constitué par un anneau en appui contre une face plane de la deuxième bague de roulement en regard de la face interne de la première bague de roulement. Le codeur peut notamment être un codeur magnétique à une ou plusieurs pistes, chaque piste étant constituée de pôles magnétiques avec des alternances de polarité prédéfinies. Pour faciliter son maintien, l'anneau codeur comporte en outre une jupe cylindrique emmanchée dans un évidement cylindrique de la deuxième bague de roulement. Le codeur peut aussi être une roue phonique présentant des reliefs détectables, par exemple des dentures ou des trous.

Suivant un mode de réalisation préféré, la première bague de roulement est une bague extérieure et la deuxième bague de roulement est une bague intérieure. Dans une application envisagée, la première bague de roulement est destinée à être fixée à un carter de groupe motoréducteur, la deuxième bague de roulement étant quant à elle solidarisée à un arbre de sortie de ce groupe motoréducteur. A cet effet, on peut prévoir que la deuxième bague de roulement comporte une portée cylindrique d'emmanchement d'un arbre.

Suivant un mode de réalisation, les chemins de roulement ont un profil en ogive, les corps roulants étant des billes ayant chacune deux points de contact avec chacun des chemins de roulement. Alternativement, le roulement est un roulement à rouleaux cylindriques croisés, les chemins de roulement étant plans. On obtient ainsi une très grande rigidité, souhaitée notamment dans les applications robotiques.

Suivant un autre aspect de l'invention, celle-ci a trait à un Module motoréducteur comportant un moteur, un réducteur comportant un organe de sortie, un carter et un roulement tel que décrit précédemment, formant un palier de guidage de l'organe de sortie.

### BRÈVE DESCRIPTION DES FIGURES

D'autres caractéristiques et avantages de l'invention ressortiront à la lecture de la description qui suit, en référence aux figures annexées, qui illustrent :
- la figure 1, une vue en éclaté d'un ensemble motoréducteur selon un mode de réalisation de l'invention;
- la figure 2, une vue de face du motoréducteur de la figure 1;
- la figure 3, une vue suivant le plan de coupe A-A de la figure 2;
- la figure 4, une vue suivant le plan de coupe B-B de la figure 2;
- la figure 5, un éclaté d'un roulement instrumenté du moto réducteur de la figure 1;

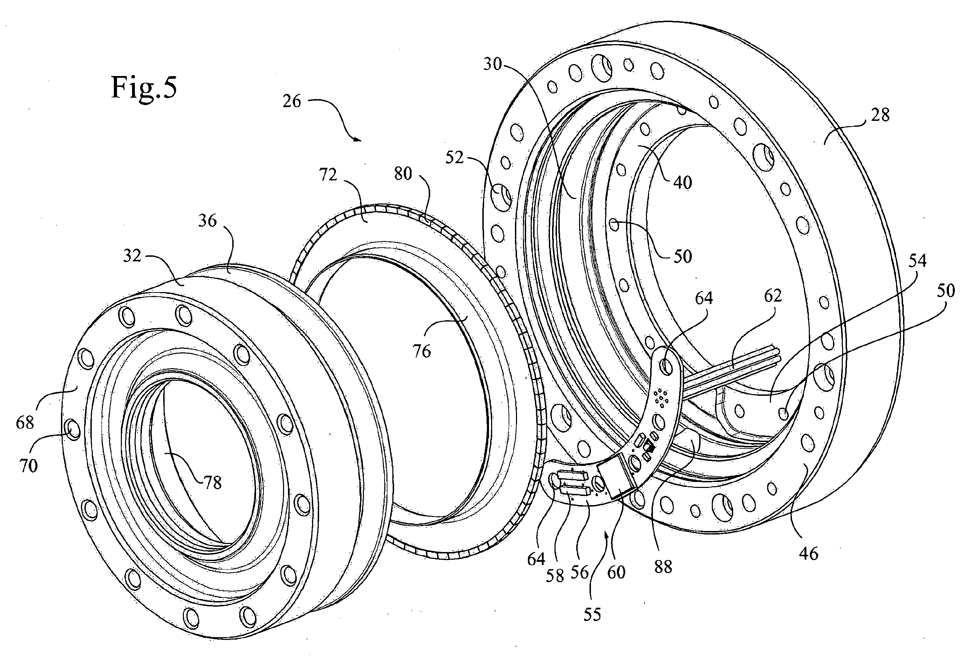

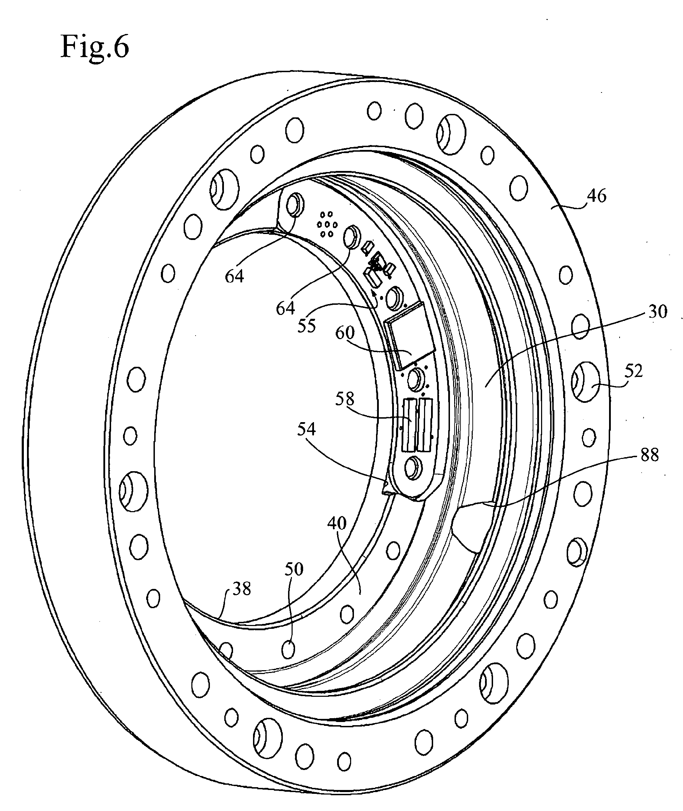

- la figure 5, une vue en perspective du roulement de la figure 6;

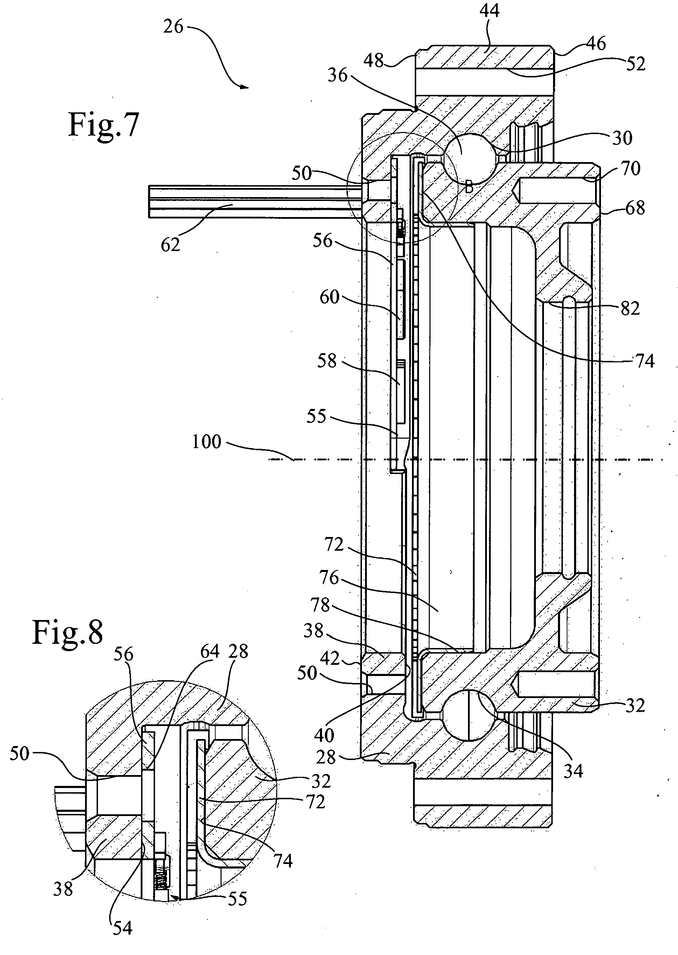

- la figure 7, une vue en coupe du roulement de la figure 5;
- la figure 8, un détail de la figure 7;

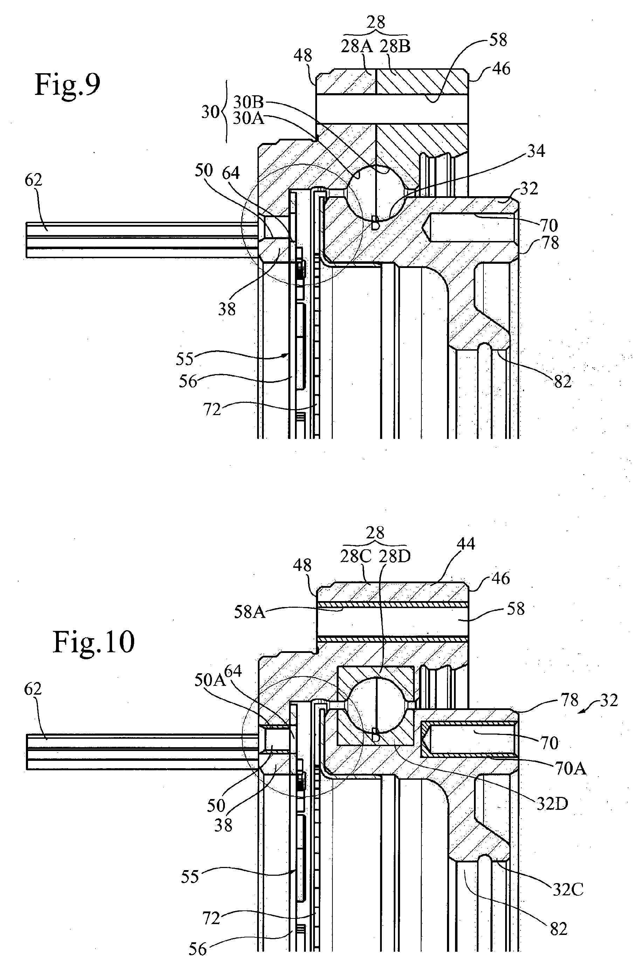

- la figure 9, un deuxième mode de réalisation de l'invention;
- la figure 10, un troisième mode de réalisation de l'invention.

Pour plus de clarté, les éléments identiques sont repérés par des signes de référence identiques sur l'ensemble des figures.

### DESCRIPTION DÉTAILLÉE D'UN MODE DE RÉALISATION

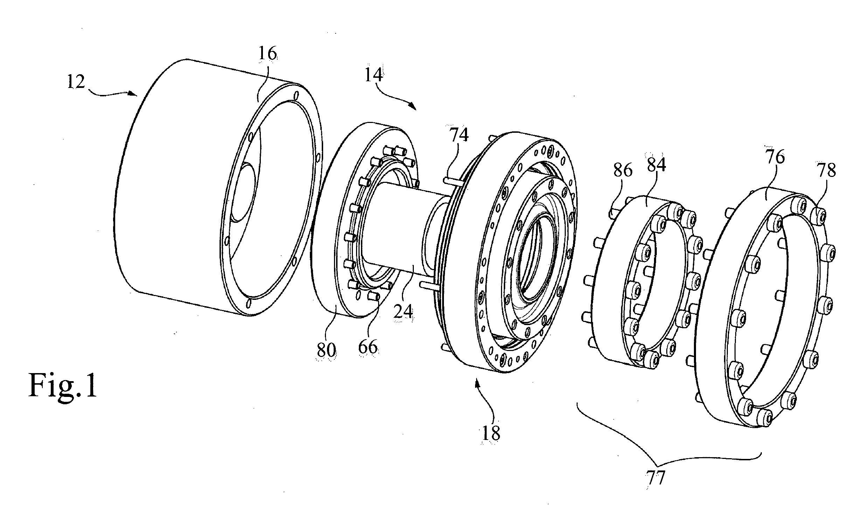

En référence aux figures 1 à 4, un groupe motoréducteur 10, comporte notamment un moteur électrique 12 et un réducteur 14, protégé par un carter 16. L'arbre moteur 18 entraîne en rotation un premier étage de réduction 20 qui entraîne un deuxième étage de réduction 22, qui lui-même entraîne un organe de sortie 24 du réducteur 14, constitué par un cylindre creux. Le moteur et le réducteur n'ont été illustrés que de manière schématique, leur structure étant indifférente pour la suite de l'exposé. L'organe de sortie est guidé par un roulement 26 fermant le carter 16 du réducteur 14.

Le roulement 26, illustré en détail sur les figurés 5 à 8, comporte une bague extérieure 28 monobloc métallique présentant un chemin de roulement 30 tourné radialement vers l'intérieur, une bague intérieure 32 monobloc métallique présentant un chemin de roulement 34 tourné radialement vers l'extérieur en regard du chemin de roulement 30 de la bague extérieure 28, et des corps roulant 36, en l'espèce des billes, roulant sur les chemins de roulement 30, 34, pour assurer une rotation de la bague intérieure 32 par rapport à la bague extérieure 28 autour d'un axe de rotation 100.

La bague extérieure 28 comporte un premier épaulement annulaire 38 s'étendant radialement vers l'intérieur, par rapport au chemin de roulement 30, et présentant une face interne 40 tournée axialement vers les chemins de roulement 30, 34, et une face externe annulaire plane 42 tournée axialement à l'opposé des chemins de roulement 30, 34.

La bague extérieure 28 comporte en outre un deuxième épaulement 44 s'étendant radialement, par rapport au chemin de roulement, vers l'extérieur et comportant une première face annulaire plane 46 tournée axialement d'un même côté que la face interne 40 et une deuxième face annulaire plane 48 tournée axialement d'un même côté que la face externe 42.

Le premier épaulement 38 est traversé par des trous de fixation 50 débouchant sur les faces interne 40 et externe 42 et de préférence filetés de part en part. De même le deuxième épaulement 44 est traversé par des trous de fixation 52 débouchant sur les faces 46, 48 et de préférence filetés de part en part. Les trous de fixation 50, 52 sont parallèles à l'axe 100.

La face interne 40 du premier épaulement est sensiblement plane, et comporte un renfoncement local 54 en arc de cercle s'étendant sur environ 120°, qui sert de logement pour un ensemble capteur 55 comportant une plaque de circuit imprimé 56 sur laquelle sont fixés par exemple un capteur magnéto-résistif 58, un circuit intégré spécifique à l'application 60 (ASIC) et une interface de connexion 62, la plaque de circuit imprimé réalisant un circuit électrique de liaison entre ces éléments. La plaque de circuit imprimé 56 est de préférence collée dans le renfoncement 54. Le renfoncement local 54 présente de préférence une profondeur supérieure ou égale à l'épaisseur cumulée de la plaque 56 et du plus haut des composants 58,60 fixés sur la plaque 56 de sorte que l'ensemble 55 ne fait pas saillie hors du renfoncement 54.

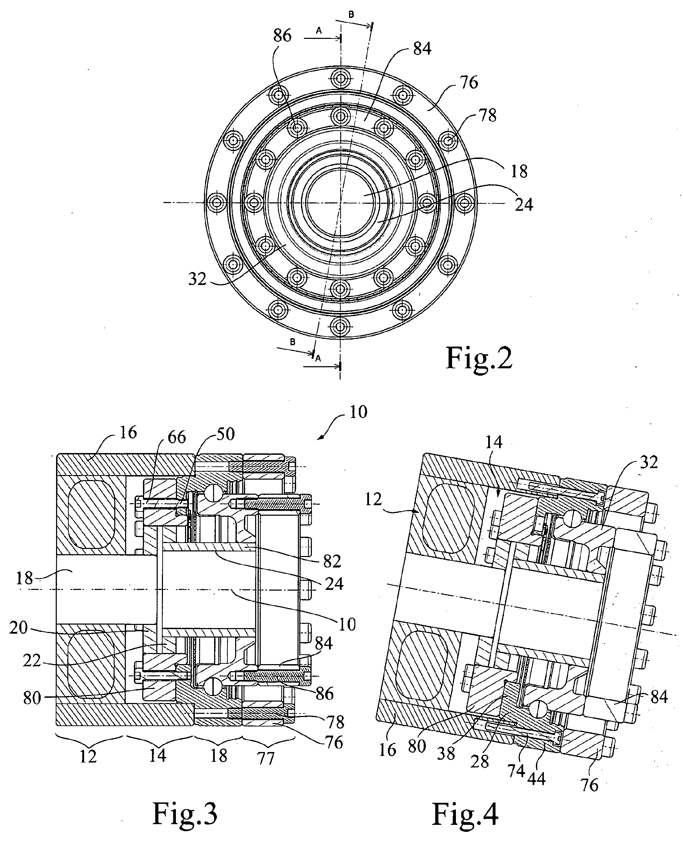

De façon remarquable, un ou plusieurs des trous de fixation 50 débouchent dans le renfoncement 54, et la plaque 56 est traversée par un ou plusieurs trous 64 alignés avec les trous de fixation 50, ce qui permet d'insérer le cas échéant une ou plusieurs vis de fixation 66 dont l'extrémité libre dépasse des trous de fixation 50 pour venir se loger dans les trous 64 correspondants de la plaque 56, comme illustré sur la figure 3, ce qui permet d'utiliser toute la longueur du filetage du trou de fixation 50, et de garantir une bonne fixation malgré un faible épaisseur de l'épaulement 38. Cette disposition permet également le cas échéant d'utiliser les mêmes vis 66 pour tous les trous de fixation 50.

La bague intérieure 32 de roulement comporte une portée plane 68 tournée à l'opposé des chemins de roulement 30, 34 et percée de trous de fixation 70, de préférence filetés de part en part.

Sur la bague intérieure 32 est monté un codeur magnétique annulaire 72 en appui contre une face plane 74 de la bague en regard de la face interne 40 de la bague intérieure, à faible distance et en regard du capteur 58. L'anneau codeur 72 comporte en outre une jupe cylindrique 76 emmanchée dans un évidement cylindrique 78 de la bague intérieure 32. Le codeur peut comporter une ou plusieurs pistes magnétiques 80 constituées des pôles adjacents de polarité alternée.

La bague intérieure comporte en outre une portée cylindrique d'emmanchement 82 de l'organe de sortie 24 du motoréducteur 10.

Le roulement instrumenté constitué des deux bagues 28, 32, des corps roulants 36, du capteur 58 et du codeur 72 constitue un sous-ensemble structurel et fonctionnel compact qui, grâce aux interfaces de fixation multiples formées par les trous de fixation 50, 52, 70 peut être monté sur divers motoréducteurs et adapté à diverses applications. Sur les figures 1 à 5, l'épaulement 44 est en appui contre le carter 16 du motoréducteur auquel il est fixé par des vis 74 traversant certains des trous 52 (Figure 4). Les autres trous 52 peuvent permettre de fixer la bague extérieure 28 à une partie fixe 76 d'un organe 77 situé en aval du roulement 18, ici une couronne fixe 76, à l'aide de vis 78.

L'épaulement 38 de la bague extérieure 28 vient quant à lui en appui avec une partie fixe 80 de l'étage de réduction, par exemple une couronne, dentée ou non, à laquelle il est solidarisé par l'intermédiaire de vis 66, dont on a dit que certaines pénètrent dans les trous 64 de l'ensemble capteur 55.

Enfin, les trous 70 de la bague intérieure tournante permettent la fixation d'une partie mobile 84 de l'organe aval 77, à l'aide de vis 86.

Naturellement, diverses variations sont possibles.

Dans l'application envisagée, qui exige une grande rigidité entre les bagues de roulement 28, 32, les chemins de roulement 30, 34 sont de préférence en ogive de manière à présenter chacune deux points de contact avec chaque bille 36, le roulement étant dit radial à quatre points de contact. On peut prévoir, pour l'insertion des billes 36 entre les chemins de roulement 30, 34, un trou d'accès radial 88 dans la bague extérieure, fermé par un bouchon. On peut également prévoir, suivant une variante de réalisation illustrée sur la figure 9, que la bague extérieure 28 soit en deux parties annulaires 28A, 28B, chacune pourvue d'un demi chemin de roulement 30A, 30B. Certains des trous de fixation 52, par exemple un sur deux, peuvent être utilisés pour fixer l'une à l'autre les deux parties annulaires de la bague extérieure. Des reliefs spécifiques peuvent être prévus à l'interface de contact entre les deux parties annulaires 28A, 28B de la bague extérieure 28.

Suivant une autre variante de réalisation illustrée sur la figure 10, la bague extérieure monobloc 28 est constituée d'un corps en matière plastique 28C, surmoulé sur des douilles métalliques 50A, 58A formant les trous de fixation 50, 58, et sur un anneau métallique 28D formant le chemin de roulement 30. Comme la bague extérieure 28, la bague intérieure 32 est de préférence constituée d'une pièce métallique annulaire 32D formant le chemin de roulement, de douilles métalliques 70A formant les trous de fixation 70 et d'un corps en matière plastique 32C surmoulé sur l'anneau 32D et les douilles métalliques 70A.

On peut également prévoir de surmouler la plaque de circuit imprimé 56 dans la matière plastique de la bague extérieure 28.

Parmi les variantes envisagées, on notera que les différentes caractéristiques des différents modes de réalisations peuvent être combinées entre elles: par exemple, il peut être envisagé de réaliser une bague extérieure à corps en matière plastique d'une seule pièce, et/ou avec un insert métallique annulaire d'une seule pièce formant le chemin de roulement extérieure. On peut envisager de ne pas prévoir de douille métallique pour les trous de fixation. Le roulement peut être à deux, trois ou quatre points de contact.

On peut également, en lieu et place de billes, prévoir des rouleaux cylindriques croisés, et modifier le profil des chemins de roulement en conséquence.

On peut également, avec le même avantage de compacité, adapter l'invention à un dispositif à bague intérieure fixe et bague extérieure tournante, auquel cas, on prévoit de positionner le capteur dans un renfoncement axial de la bague intérieure, en regard de la bague extérieure.

L'unité de capteur 55 peut être fixée par tout moyen approprié à la face interne 40. On peut notamment mettre à profit certains des trous de fixation 50 alignés avec les trous 64 de la plaque pour y insérer des vis de fixation. On peut également profiter des vis 66 pour fixer l'unité de capteur. On peut notamment prévoir un relief à l'extrémité des vis 66 pour y encliqueter des pinces ou rondelles élastiques venant en appui contre l'unité de capteur.

## Revendications

1. Bague de roulement instrumentée comportant
- une première bague de roulement monobloc (28) comportant au moins un chemin de roulement (30) définissant un axe de rotation (100), le chemin de roulement (30) étant tourné radialement dans une première direction vers l'intérieur ou vers l'extérieur, et
- une unité de capteur (55) destinée à être positionnée en regard d'un codeur (72) solidaire d'une deuxième bague de roulement (32) pour former un roulement instrumenté (26),
**caractérisée en ce que**
- la première bague de roulement monobloc (26) comporte au moins un premier épaulement annulaire (38) s'étendant radialement, par rapport au chemin de roulement (30), dans la première direction, et présentant une face interne (40) tournée axialement vers le chemin de roulement (30), et une face externe annulaire plane (42) tournée axialement à l'opposé du chemin de roulement (30), le premier épaulement (38) étant traversé par des trous de fixation (50) débouchant sur les faces interne (40) et externe (42); et
- l'unité de capteur (55) est en appui contre la face interne (40).

2. Bague de roulement instrumentée selon la revendication 1, **caractérisée en ce que** l'unité de capteur (55) comporte une plaque de support (56) traversée par un ou plusieurs trous (64) alignés avec un ou plusieurs des trous de fixation (50).

3. Bague de roulement instrumentée selon la revendication 2, **caractérisée en ce que** la plaque de support (56) est une plaque de circuit imprimé.

4. Bague de roulement instrumentée selon l'une quelconque des revendications précédentes, **caractérisée en ce que** l'unité de capteur (55) présente une forme en arc ouvert d'anneau.

5. Bague de roulement instrumentée selon la revendication précédente, **caractérisée en ce que** la face interne (40) comporte, sur un secteur angulaire ouvert autour de l'axe de rotation, un renfoncement (54) dans lequel est logé l'unité de capteur (55), le secteur angulaire ouvert étant de préférence inférieur à 180°, et de préférence inférieur à 120°.

6. Bague de roulement instrumentée selon l'une quelconque des revendications 1 à 3, **caractérisée en ce que** l'unité de capteur (55) présente une forme annulaire.

7. Bague de roulement instrumentée selon l'une quelconque des revendications précédentes, **caractérisée en ce que** les trous de fixation (50) sont filetés de bout en bout.

8. Bague de roulement instrumentée selon l'une quelconque des revendications précédentes, **caractérisée en ce que** la première bague de roulement (28) comporte en outre un deuxième épaulement (44) s'étendant radialement, par rapport au chemin de roulement (30), dans une direction radiale opposée à la première direction, et comportant une première face (46) tournée axialement d'un même côté que la face interne (40) et une deuxième face (48) tournée axialement d'un même côté que la face externe (42), le deuxième épaulement (44) étant traversé par des trous de fixation (52) débouchant sur la première face (46) et la deuxième face (48).

9. Bague de roulement instrumentée selon l'une quelconque des revendications précédentes, **caractérisée en ce que** la première direction est la direction radiale vers l'intérieur, le chemin de roulement (30) étant tourné radialement vers l'intérieur et le premier épaulement (38) s'étendant radialement vers l'intérieur par rapport au chemin de roulement (30), la bague de roulement (28) étant une bague extérieure de roulement.

10. Bague de roulement instrumentée selon l'une quelconque des revendications précédentes, **caractérisée en ce que** la première bague de roulement est constituée d'une pièce métallique.

11. Bague de roulement instrumentée selon l'une quelconque des revendications 1 à 9, **caractérisée en ce que** la première bague comporte au moins une pièce métallique annulaire (28D) formant le chemin de roulement (30) et un corps (28C) en matériau plastique surmoulé sur la pièce métallique (28D) et incluant le premier épaulement (38).

12. Bague de roulement instrumentée selon la revendication 11, **caractérisée en ce que** le corps (28C) comporte des inserts métalliques (58A) constituant les trous de fixation (50).

13. Roulement instrumenté (26) comportant une bague de roulement instrumentée selon l'une quelconque des revendications précédentes, une deuxième-bague de roulement (32) et des corps roulants (36), la deuxième bague de roulement (32) comportant au moins un chemin de roulement (34) en regard du chemin de roulement (30) de la première bague de roulement, les corps roulant (36) étant en contact avec les chemins de roulement (30, 34) de la première bague de roulement et de la deuxième bague de roulement, la deuxième bague de roulement (28) étant équipée d'un codeur (72) disposé en regard et à distance de lecture de l'unité de capteur (55) de la première bague de roulement (28).

14. Roulement selon la revendication précédente, **caractérisé en ce que** le codeur (72) est constitué par un anneau en appui contre une face plane (74) de la deuxième bague de roulement (32) en regard de la face interne (40) de la première bague de roulement (28).

15. Roulement selon la revendication précédente, **caractérisé en ce que** le codeur (72) comporte en outre une jupe cylindrique (76) emmanchée dans un évidement cylindrique (78) de la deuxième bague de roulement (32).

16. Roulement selon l'une quelconque des revendications 13 à 15, **caractérisé en ce que** la deuxième bague de roulement (32) comporte une portée plane (68) percée de trous de fixation (70).

17. Roulement selon l'une quelconque des revendications 13 à 16, **caractérisé en ce que** la deuxième bague de roulement (32) comporte une pièce métallique annulaire (32D) formant le chemin de roulement (34) de la deuxième bague de roulement (28) et un corps en matière plastique (32C) surmoulé sur la pièce métallique (32D).

18. Roulement selon l'une quelconque des revendications 13 à 17, **caractérisé en ce que** la première bague de roulement (28) est une bague extérieure et la deuxième bague de roulement (32) est une bague intérieure.

19. Roulement selon la revendication 18, **caractérisé en ce que** la deuxième bague de roulement (32) comporte une portée cylindrique (82) d'emmanchement d'un arbre.

20. Roulement selon l'une quelconque des revendications 13 à 19, **caractérisé en ce que** les chemins de roulement (30, 34) ont un profil en ogive, les corps roulants (36) étant des billes ayant chacune deux points de contact avec chacun des chemins de roulement (30, 34).

21. Roulement selon l'une quelconque des revendications 13 à 19, **caractérisé en ce que** le roulement est un roulement à rouleaux croisés.

22. Module motoréducteur (10) comportant un moteur (12), un réducteur (14) comportant un organe de sortie (24), un carter (16) et un roulement (18) selon l'une quelconque des revendications 13 à 21, formant un palier de guidage de l'organe de sortie (24).

## Patentansprüche

1. Instrumentierter Wälzlagerlaufring, der folgendes umfasst:
- einen ersten Wälzlagerlaufring aus einem Stück (28) mit mindestens einem Rollweg (30), der eine Drehachse (100) definiert, wobei der Rollweg (30) radial in eine erste Richtung nach innen oder außen gedreht ist, und
- eine Sensoreinheit (55), die dazu bestimmt ist, gegenüber eines mit einem zweiten Wälzlagerlaufring (32) befestigten Kodierers (72) positioniert zu werden, um ein instrumentiertes Wälzlager (26) zu bilden,
**dadurch gekennzeichnet, dass**
- der erste Wälzlagerlaufring aus einem Stück (26) mindestens eine erste ringförmige Schulter (38) umfasst, die sich im Verhältnis zum Rollweg (30) radial in der ersten Richtung erstreckt, eine Innenfläche (40) aufweist, die axial zum Rollweg (30) gedreht ist, und eine ringförmige ebene Außenfläche (42) aufweist, die axial zu der dem Rollweg (30) entgegengesetzten Seite gedreht ist, wobei sich durch die erste Schulter (38) Befestigungslöcher (50) erstrecken, die auf die Innenfläche (40) und die Außenfläche (42) münden; und
- die Sensoreinheit (55) an der Innenfläche (40) aufliegt.

2. Instrumentierter Wälzlagerlaufring nach Anspruch 1, **dadurch gekennzeichnet, dass** die Sensoreinheit (55) eine Trägerplatte (56) umfasst, durch welche sich ein oder mehrere Löcher (64) erstrecken, die auf ein oder mehrere der Befestigungslöcher (50) ausgerichtet sind.

3. Instrumentierter Wälzlagerlaufring nach Anspruch 1, **dadurch gekennzeichnet**, das die Trägerplatte (56) eine Leiterplatte ist.

4. Instrumentierter Wälzlagerlaufring nach einem der vorhergehenden Ansprüche, **dadurch gekennzeichnet, dass** die Sensoreinheit (55) die Form eines offenen Ringbogens aufweist.

5. Instrumentierter Wälzlagerlaufring nach dem vorhergehenden Anspruch, **dadurch gekennzeichnet, dass** die Innenfläche (40) in einem zur Drehachse hin offenen Winkelabschnitt eine Vertiefung (54) aufweist, in welcher die Sensoreinheit (55) gelagert ist, wobei der offene Winkelabschnitt vorzugsweise kleiner als 180° bzw. kleiner als 120° ist.

6. Instrumentierter Wälzlagerlaufring nach einem der Ansprüche 1 bis 3, **dadurch gekennzeichnet, dass** die Sensoreinheit (55) ringförmig ist.

7. Instrumentierter Wälzlagerlaufring nach einem der vorhergehenden Abschnitte, **dadurch gekennzeichnet, dass** die Befestigungslöcher (50) eine durchgehende Gewindebohrung aufweisen.

8. Instrumentierter Wälzlagerlaufring nach einem der vorhergehenden Ansprüche, **dadurch gekennzeichnet, dass** der erste Wälzlagerlaufring (28) des Weiteren eine zweite Schulter (44) umfasst, die sich im Verhältnis zum Rollweg (30) radial in einer radialen Richtung entgegensetzt der ersten Richtung erstreckt, und eine erste Fläche (46) aufweist, die axial von der gleichen Seite wie die Innenfläche (40) gedreht wird, und eine zweite Fläche (48), die axial von der gleichen Seite wie die Außenfläche (42) gedreht wird, wobei sich durch die zweite Schulter (44) Befestigungslöchern (52) erstrecken, die auf die erstn Fläche (46) und die zweiten Fläche (48) münden.

9. Instrumentierter Wälzlagerlaufring nach einem der vorhergehenden Ansprüche, **dadurch gekennzeichnet, dass** die erste Richtung die radiale Richtung nach innen ist, wobei der Rollweg (30) radial nach innen gedreht ist, und sich die erste Schulter (38) im Verhältnis zum Rollweg (30) radial nach innen erstreckt, wobei der Wälzlagerlaufring (28) ein äußerer Wälzlagerlaufring ist.

10. Instrumentierter Wälzlagerlaufring nach einem der vorhergehenden Ansprüche, **dadurch gekennzeichnet, dass** der erste Lagerring aus einem Metallteil besteht.

11. Instrumentierter Wälzlagerlaufring nach einem der Ansprüche 1 bis 9, **dadurch gekennzeichnet, dass** der erste Ring mindesten ein ringförmiges Metallteil (28D) aufweist, welches den Rollweg (30) bildet, und einen Körper (28C) aus Kunststoff, der auf das Metallteil (28D) aufgeformt ist und die erste Schulter (38) beinhaltet.

12. Instrumentierter Wälzlagerlaufring nach Anspruch 11, **dadurch gekennzeichnet, dass** das Gehäuse (28D) Metalleinlagen (58A) enthält, welche die Befestigungslöcher (50) bilden.

13. Instrumentiertes Wälzlager (26) mit einem instrumentierten Wälzlagerlaufring nach einem der vorhergehenden Ansprüche, einem zweiten Wälzlagerlaufring (32) und Rollkörpern (36), wobei der zweite Wälzlagerlaufring (32) mindestens einen Rollweg (34) gegenüber dem Rollweg (30) des ersten Wälzlagerlaufrings aufweist, wobei die Rollkörper (36) mit den Rollwegen (30, 34) des ersten Wälzlagerlaufrings und des zweiten Wälzlagerlaufrings in Kontakt sind, und der zweite Wälzlagerlaufring (28) mit einem Kodierer (72) versehen ist, der gegenüber der Sensoreinheit (55) des ersten Wälzlagerlaufrings(28) in Leseabstand angeordnet ist.

14. Wälzlager nach dem vorhergehenden Anspruch, **dadurch gekennzeichnet, dass** der Kodierer (72) aus einem Ring besteht, der auf einer ebenen Fläche (74) des zweiten Wälzlagerlaufrings (32) gegenüber der Innenfläche (40) des ersten Wälzlagerlaufrings (28) aufliegt.

15. Wälzlager nach dem vorhergehenden Anspruch, **dadurch gekennzeichnet, dass** der Kodierer (72) darüber hinaus einen zylinderförmigen Mantel (76) aufweist, der in eine zylindrische Ausnehmung (78) des zweiten Wälzlagerlaufrings (32) eingeschoben ist.

16. Wälzlager nach einem der Ansprüche 13 bis 15, **dadurch gekennzeichnet, dass** der zweite Wälzlagerlaufring (32) eine ebene Auflage (68) umfasst, in welche Befestigungslöcher (70) gebohrt sind.

17. Wälzlager nach einem der Ansprüche 13 bis 16, **dadurch gekennzeichnet, dass** der zweite Wälzlagerlaufring (32) ein ringförmiges Metallteil (32D) enthält, das den Rollweg (34) des zweiten Wälzlagerlaufrings (28) bildet, und einen Körper aus Kunststoff (32C), der auf das Metallteil (32D) aufgeformt ist.

18. Wälzlager nach einem der Ansprüche 13 bis 17, **dadurch gekennzeichnet, dass** der erste Wälzlagerlaufring (28) ein Außenring und der zweite Wälzlagerlaufring (32) ein Innenring ist.

19. Wälzlager nach Anspruch 18, **dadurch gekennzeichnet, dass** der zweite Wälzlagerlaufring (32) eine zylindrische Auflage (82) zum Einschieben einer Welle aufweist.

20. Wälzlager nach einem der Ansprüche 13 bis 19, **dadurch gekennzeichnet, dass** die Rollwege (30, 34) ein spitzbogenförmiges Profil haben und die Rollkörper (36) Kugeln sind, die jeweils zwei Berührungspunkten mit jedem der Rollwege (30, 34) haben.

21. Wälzlager nach einem der Ansprüche 13 bis 19, **dadurch gekennzeichnet, dass** das Lager ein Kreuzrollenlager ist.

22. Motorgetriebemodul (10) mit einem Motor (12), einem Untersetzungsgetriebe (14), einem Austrittselement (24), einem Gehäuse (16) und einem Wälzlager (18) nach einem der Ansprüche 13 bis 21, das ein Führungslager für das Austrittselement (24) bildet.

## Claims

1. An instrumented bearing ring comprising :
- a first one-piece bearing ring (28) comprising at least one raceway (30) defining an axis of rotation (100), with the raceway (30) radially facing in a first direction inwards or outwards, and
- a sensor unit (55) intended to be positioned opposite an encoder (72) secured to a second bearing ring (32) so as to form an instrumented bearing (26),
**characterized in that**
- the first one-piece bearing ring (26) comprises at least a first annular shoulder (38) extending radially relative to the raceway (30) in the first direction, and having an inner face (40) axially facing toward the raceway (30), and a flat annular outer face (42) axially facing away from the raceway (30), with fixing holes (50) going through the first shoulder (38) and opening on the inner (40) and outer (42) faces; and
- the sensor unit (55) bears against the inner face (40).

2. An instrumented bearing ring according to claim 1, **characterized in that** the sensor unit (55) comprises a support plate (56) through which one or more holes (64) aligned with one or more of the fixing holes (50) are provided.

3. An instrumented bearing ring according to claim 2, **characterized in that** the support plate (56) is a printed circuit board.

4. An instrumented bearing ring according to any one of the preceding claims, **characterized in that** the sensor unit (55) has an open arc-shaped ring.

5. An instrumented bearing ring according to the preceding claim, **characterized in that** the inner face (40) comprises, over an open angular sector about the axis of rotation, a recess (54) which accommodates the sensor unit (55), with the open angular sector being preferably less than 180°, and preferably less than 120°.

6. An instrumented bearing ring according to any one of claims 1 to 3, **characterized in that** the sensor unit (55) has an annular shape.

7. An instrumented bearing ring according to any one of the preceding claims, **characterized in that** the fixing holes (50) are threaded from one end to the other.

8. An instrumented bearing ring according to any one of the preceding claims, **characterized in that** the first bearing ring (28) further comprises a second shoulder (44) extending radially relative to the raceway (30), in a radial direction opposite the first direction, and having a first face (46) axially facing toward the same side as the inner face (40) and a second face (48) axially facing toward the same side as the outer face (42), with fixing holes (52) going through the second shoulder (44) and opening on the first face (46) and the second face (48).

9. An instrumented bearing ring according to any one of the preceding claims, **characterized in that** the first direction is the radially inward direction, with the raceway (30) facing radially inwards and the first shoulder (38) radially extending inwards relative to the raceway (30), with the bearing ring (28) being an outer bearing ring.

10. An instrumented bearing ring according to any one of the preceding claims, **characterized in that** the first bearing ring is made of a metal part.

11. An instrumented bearing ring according to any one of claims 1 to 9, **characterized in that** the first ring comprises at least one annular metal part (28D) forming the raceway (30) and a body (28C) made of plastic material moulded over the metal part (28D) and including the first shoulder (38).

12. An instrumented bearing ring according to claim 11, **characterized in that** the body (28C) comprises metal inserts (58A) making up the fixing holes (50).

13. An instrumented bearing (26) comprising an instrumented bearing ring according to any one of the preceding claims, a second bearing ring (32) and rolling bodies (36), with the second bearing ring (32) comprising at least one raceway (34) opposite the raceway (30) of the first bearing ring, with the rolling bodies (36) being in contact with the raceways (30, 34) of the first bearing ring and of the second bearing ring, with the second bearing ring (28) being provided with an encoder (72) positioned opposite and at a reading distance from the sensor unit (55) of the first bearing ring (28).

14. A bearing according to the preceding claim, **characterized in that** the encoder (72) is formed by a ring bearing against a flat face (74) of the second bearing ring (32) opposite the inner face (40) of the first bearing ring (28).

15. A bearing according to the preceding claim, **characterized in that** the encoder (72) further comprises a cylindrical skirt (76) fitted into a cylindrical recess (78) of the second bearing ring (32).

16. A bearing according to any one of claims 13 to 15, **characterized in that** the second bearing ring (32) comprises a flat seat (68) pierced with fixing holes (70) .

17. A bearing according to any one of claims 13 to 16, **characterized in that** the second bearing ring (32) comprises an annular metal part (32D) forming the raceway (34) of the second bearing ring (28) and a body (32C) made of plastic material moulded over the metal part (32D).

18. A bearing according to any one of claims 13 to 17, **characterized in that** the first bearing ring (28) is an outer ring and the second bearing ring (32) is an inner ring.

19. A bearing according to claim 18, **characterized in that** the second bearing ring (32) comprises a cylindrical shaft fitting seat (82).

20. A bearing according to any one of claims 13 to 19, **characterized in that** the raceways (30, 34) have an ogival profile, with the rolling bodies (36) being balls each having two contact points with each one of the raceways (30, 34).

21. A bearing according to any one of claims 13 to 19, **characterized in that** the bearing is a crossed roller bearing.

22. A geared motor unit (10) comprising a motor (12), a reduction gear (14) comprising an outlet element (24), a casing (16) and a bearing (18) according to any one of claims 13 to 21, forming a guide bearing for the outlet element (24).
